# EUROPÄISCHE PATENTSCHRIFT

(11) **EP 2 458 755 B1**
(45) Veröffentlichungstag und Bekanntmachung des Hinweises auf die Patenterteilung: **16.01.2019**
(21) Anmeldenummer: 10192774.7
(22) Anmeldetag: 26.11.2010
(51) Int. Cl.: H04J 3/06

(54) **Anordnung und Verfahren zum Austausch von Zeitmarken**
Assembly and method for exchanging timestamps
Agencement et procédé destinés à l'échange de marques temporelles

(43) Veröffentlichungstag der Anmeldung: 30.05.2012
(73) Patentinhaber: Siemens Aktiengesellschaft, 80333 München (DE)
(72) Erfinder: Steindl, Günter, 92284 Poppenricht (DE)

(56) Entgegenhaltungen:
- "IEEE Standard for a Precision Clock Synchronization Protocol for Networked Measurement and Control Systems;IEEE Std 1588-2008 (Revision of IEEE Std 1588-2002) ED - Anonymous", IEEE STANDARD; [IEEE STANDARD], IEEE, PISCATAWAY, NJ, USA, 24. Juli 2008 (2008-07-24), Seiten C1-269, XP017604130, ISBN: 978-0-7381-5400-8
- PAOLO FERRARI ET AL: "On the Seamless Interconnection of IEEE1588-Based Devices Using a PROFINET IO Infrastructure", IEEE TRANSACTIONS ON INDUSTRIAL INFORMATICS, IEEE SERVICE CENTER, NEW YORK, NY, US, Bd. 6, Nr. 3, 1. August 2010 (2010-08-01), Seiten 381-392, XP011312327, ISSN: 1551-3203
- DAVID GUNZINGER ET AL: "Optimising PROFINET IRT for fast cycle times: A proof of concept", FACTORY COMMUNICATION SYSTEMS (WFCS), 2010 8TH IEEE INTERNATIONAL WORKSHOP ON, IEEE, PISCATAWAY, NJ, USA, 18. Mai 2010 (2010-05-18), Seiten 35-42, XP031732754, ISBN: 978-1-4244-5460-0

## Beschreibung

Die Erfindung betrifft eine Anordnung mit einer Einrichtung zum Austausch von Zeitmarken zwischen einem Zeitgeber und einem Zeitempfänger gemäß dem Oberbegriff des Patentanspruchs 1, und ein Verfahren zum Austausch von Zeitmarken zwischen einem ersten und einem zweiten Netzwerk gemäß dem Oberbegriff des Patentanspruchs 3.

In vielen Bereichen der Technik ist es erforderlich, die in verschiedenen technischen Geräten vorliegende Zeitinformation, beispielsweise die Uhrzeit, exakt miteinander zu synchronisieren. Bei Geräten und Komponenten, die mittels eines Datennetzwerks miteinander verbunden sind, werden dazu spezielle Nachrichten ausgetauscht, die auch als Zeitmarken oder "Time Stamp Messages" oder "Synchronisationsnachrichten" bezeichnet werden. Je nach der Technologie bzw. dem verwendeten Kommunikationsprotokoll werden für die Zeitmarken unterschiedliche standardisierte Protokolle verwendet. Beispielsweise werden in der für Bürokommunikation gebräuchlichen Netzwerktechnik, die auf einer Ethernet-Verkabelung basiert und Daten gemäß des TCP/IP-Protokolls austauscht, für die Zeitmarken das nach IEEE1588 genormte Protokoll PTPv2 (PTP = Precision Time Protocol) oder auch gPTP gemäß der Norm IEEE 802.1 AS verwendet, wogegen in den für die Automatisierungstechnik und Prozessleittechnik gebräuchlichen Profinet-Netzwerken, z.B. Profinet IO, das nach IEC 61158 Type 10 standardisierte Verfahren PTCP (PTCP = Precision Transparent Clock Protocol) verwendet wird.

Neben den erwähnten Zeitmarken, die von einem Zeitgeber, auch "Master", "Time Master" oder "Time Server" genannt, zu einem Zeitnehmer, auch "Zeitempfänger", "Client" oder "Time Slave" genannt, übertragen werden, werden zusätzlich Nachrichten versendet, mit denen die Laufzeit (Line Delay) der Synchronisierungsnachrichten (Zeitmarken) ermittelt und kommuniziert werden, beispielsweise "DelayRequest-Frames" und "Delay-Response-Frames"; solche Nachrichten, die neben den Zeitmarken zwischen Zeitgeber und Zeitnehmer ausgetauscht werden, sollen im Folgenden allgemein als "Korrekturmeldungen" bezeichnet werden. Um die Laufzeit der Synchronisationsnachricht bzw. Zeitmarke zu bestimmen, werden alle Teilstrecken gemessen und bei der Auswertung der Synchronisationsnachricht beim Empfänger berücksichtigt. Damit der Empfänger keine Information über die gesamte Übertragungsstrecke (alle Teilstrecken) benötigt, werden die Delays entweder in einem eigenen Feld in der Synchronisationsnachricht kumuliert oder in einer eigenen Nachricht (Follow-up) kumuliert übertragen. Somit wird durch die Zeitmarken und durch die auch "in Gegenrichtung" versendeten Korrekturmeldungen (z.B. DelayRequest-Frames) eine Korrektur der Signallaufzeit realisiert, womit in einem Netzwerk eine Synchronisation zwischen einem Zeitgeber und einem Zeitnehmer mit hoher Präzision vorgenommen werden kann.

Zudem wird eine Regelstrecke durch den "regelmäßigen" Empfang einer (neuen) Synchronisationsnachricht bzw. Zeitmarke (sog. "Follow-up-Frames") und der damit möglichen Messung der "Drift" oder "Takt-Abweichung" im SyncSlave, also dem Zeitempfänger, geschlossen; als Stellgröße dient die Frequenz der "Uhr" im Zeitempfänger (schneller/langsamer), die über einen ersten Faktor ("Rate Compensation Factor", RCF) angepasst (korrigiert) wird. Mittels eines weiteren Faktors, dem "Offset Compensation Factor" (OCF), werden bislang aufgelaufene Abweichungen durch eine zusätzliche Beschleunigung oder Verlangsamung des Takt- oder Zeitgebers im Empfänger kompensiert; hierbei wird also die Abweichung ausgeregelt, die durch die "Drift" eines Empfänger-Quarzes o.ä. im Empfänger im Zeitraum zwischen dem Empfang zweier Zeitmarken auftritt. Die gesamte Kompensation erfolgt also nicht sprunghaft, sondern die Zeitinformation des Empfängers nähert sich im Idealfall stetig dem Sollwert an; lediglich die Laufzeitverzögerungen (Line Delays) werden nicht durch eine Anpassung des Taktes mittels der Faktoren (RCF, OCF) im Empfänger, sondern durch eine Addition des Gesamt-Delays im Empfänger berücksichtigt. Durch eine Begrenzung der Faktoren (RCF, OCF) wird die Anpassung der Empfänger-"Uhr" auf einen Anpassungs-Zeitraum verteilt; dies entspricht einer Dämpfung des Regler-Verhaltens.

In der Automatisierungstechnik, aber auch in anderen Bereichen der Technik, ist es üblich, Datennetzwerke unterschiedlicher Technologie bzw. mit unterschiedlichen Kommunikationsprotokollen miteinander zu verknüpfen; an den Schnittstellen der beiden Netzwerke werden dabei üblicher Weise als "Gateway" bezeichnete Einrichtungen eingesetzt, die Nachrichten von einem ersten in ein zweites Kommunikationsprotokoll umsetzen, und umgekehrt. Zum Austausch von Zeitmarken über die Grenzen eines Netzwerks hinweg ist es dabei bekannt, ein Gateway mit einer sog. "Boundary Clock" auszustatten, wobei diese "Boundary Clock" im Prinzip einen Zeitnehmer und einen damit verknüpften Zeitgeber umfasst. Hier werden also zwei Synchronisations-Domänen in einem Gerät mittels eines "SyncSlave" und eines "SyncMasters" miteinander verknüpft.

Der Zeitnehmer synchronisiert sich dabei mit dem Zeitgeber des sendenden Netzwerkes, wobei der Zeitnehmer die Zeitmarken des Zeitgebers des ersten Netzwerkes empfängt und mit diesem auch Korrekturmeldungen austauscht, so dass die Laufzeitverzögerung des ersten Netzwerks berücksichtigt werden kann. Dazu wird in den Zeitmarken ein separates Datenfeld "Delay" geführt, in dem die Laufzeitverzögerungen aller bislang durchlaufenen Teil-Strecken kumuliert werden. Aus den empfangenen Zeitmarken wird dann die darin codierte Zeitinformation entnommen und daraus die präzise Zeitinformation extrahiert und an einen weiteren Zeitgeber transferiert, der ebenfalls Bestandteil der "Boundary Clock" ist. Hier werden nun Zeitmarken des zweiten Netzwerkprotokolls erzeugt, die Zeitinformation neu codiert und in diese Zeitmarken einfügt und an den Empfänger (Zeitnehmer) des zweiten Netzwerks versendet, wobei dieser wiederum mit diesem zweiten Zeitgeber Korrekturmeldungen austauscht, so dass auch die Laufzeitverzögerungen des zweiten Netzwerkes ausgemessen und zusätzlich zu den Laufzeitverzögerungen des ersten Netzwerks berücksichtigt werden können. Beim Zeitnehmer (SyncSlave) wird der "Delay"-Wert zu der decodierten Zeitinformation addiert.

Bei dem Zeitnehmer und dem Zeitgeber der "Boundary Clock", bei denen es sich ebenfalls um zwei unabhängig voneinander betriebene, aber gekoppelte "Uhren" handelt, kann es sich ebenfalls um ein geregeltes System handeln, bei dem der Zeitnehmer dem Zeitgeber nachgeführt wird, so dass auch hierbei Anpassungen durch Faktoren (RCF, OCF) vorgenommen werden können oder müssen; auch kann innerhalb der "Boundary Clock" ein Delay-Wert ermittelt und zu dem entprechenden Datenfeld der Zeitmarken addiert werden.

Durch die Verwendung der bekannten "Boundary Clocks" ist es also möglich, zwei Geräte oder Komponenten miteinander zu synchronisieren, die in unterschiedlichen Netzwerken mit unterschiedlichen Protokollen für die Zeitmarken angeordnet sind. Der Einsatz von "Boundary Clocks" ist jedoch auch mit Nachteilen verbunden. Dadurch, dass prinzipiell zwei Anwendungen miteinander verknüpft werden müssen, nämlich ein Zeitnehmer und ein Zeitgeber - man spricht auch von einem "applikativen Übergang" -, kommt es zum Einen zu einer relativ langen Verweildauer der Zeitinformation in der "Boundary Clock", und damit zu Abweichungen infolge der "Drift" der nichtidealen Taktgeber der an der Übertragung der Zeitmarken beteiligten Netzwerkkomponenten, wobei mit steigendem "Alter" der Zeitinformation auch die Abweichung steigt. Während diese Abweichung bei vielen Anwendungen und bei vielen Netzwerktopologien unerheblich ist, kann es jedoch vorkommen, dass eine Vielzahl von Netzwerken miteinander verknüpft bzw. verkettet ist, so dass ein mehrfacher applikativer Übergang für die Zeitmarken erforderlich ist. Die Gesamtlaufzeit einer Zeitmarke und damit das "Alter" der Zeitinformation steigen also mit jedem Übergang zwischen Netzwerken und somit mit der Anzahl der durchlaufenden "Boundary Clocks". Zum Anderen handelt es sich bei einer Anordnung aus zwei Netzwerken und einer "Boundary Clock" um eine kaskadierte "Regelung" aus zumindest zwei Regelkreisen, nämlich einem in jedem der beiden verknüpften Netzwerke; meist kommt noch ein dritter Regelkreis innerhalb der "Boundary Clock" hinzu. Bei der Verkettung von Regelkreisen können die Kompensations-Faktoren mit jeder durchlaufenen Regelstufe größer werden. Da aber große oder gar sprunghafte Veränderungen der Zeitinformation beim (endgültigen) Zeitempfänger unerwünscht sind (Stetigkeits-Anforderung), muss das Gesamtsystem mit einer höheren Dämpfung betrieben werden. Dies bedeutet, dass mit der Anzahl der durchlaufenen Teilstrecken (Netzwerke) und "Boundary Clocks" die Gefahr von Schwingungen des "Ausgangssignals" (also der Zeitinformation) steigt; dem wird durch eine potentiell langsamere Korrektur des Zeitsignals beim Zeitempfänger an das "Master-Signal" begegnet, was jedoch zu einem langsameren und schlechteren Korrekturverhalten führt.

Die Druckschrift "IEEE Standard for a Precision Clock Synchronization Protocol for Networked Measurement and Control Systems" - IEEE Std 1588-2008 zeigt einen Standard für die Codierung von Zeitinformationen und die Verwendung von "Boundary Clocks" an Netzwerkübergängen zwischen verknüpften Netzwerken.

Die Druckschrift Ferrari et al. "On the Seamless Interconnection of IEEE1588-Based Devices Using a PROFINET IO Infrastructure" zeigt die Kovertierung von Nachrichten mit Zeitinformationen am Übergang zwischen Netzwerken mit unterschiedlichen Netzwerkprotokollen.

Es ist daher eine Aufgabe der vorliegenden Erfindung, die Synchronisation zwischen einem Zeitgeber und einem Zeitempfänger in unterschiedlichen Netzwerken, insbesondere bei Anordnungen mit mehrfachem Netzübergang, zu verbessern.

Der Lösung der Aufgabe liegt die Erkenntnis zugrunde, dass sich die Datenpakete, die für die Zeitmarken der unterschiedlichen Protokolle verwendet werden, zwar hinsichtlich der "Header" und anderer Netzwerk-spezifischer Protokoll-Informationen unterscheiden, jedoch bezüglich der Codierung des Nutzinhalts, also der Zeitinformation, nahezu überhaupt nicht voneinander unterscheiden, so dass eine direkte Übernahme der Zeitinformation von Zeitmarken eines ersten Protokolls in Zeitmarken eines zweiten Protokolls möglich ist, ohne die Zeitinformation decodieren und danach wieder neu codieren zu müssen, also ohne applikativen Übergang. Dadurch lässt sich zum Einen die "Verweildauer" der Zeitinformation im Übergang zwischen den Netzwerken verkürzen. Ein weiterer wesentlicher Gedanke der Erfindung liegt zum Anderen in der Erkenntnis, dass eine bessere Kompensation der Drift und anderer Abweichungen des Zeitnehmers möglich ist, wenn sich nur eine einzige "geschlossene Regelstrecke" anstelle einer "kaskadierten Regelung" ergibt, d.h., dass eine Regelung mittels der Kompensationsfaktoren (RCF, OCF) und einer Folge von Zeitmarken (Follow-up-Frames) über die gesamte Strecke und nicht über einzelne Teilstrecken und applikativen Übergänge (Boundary Clocks) erfolgt.

Die Lösung der Aufgabe sieht insbesondere eine Anordnung nach Patentanspruch 1 und ein Verfahren nach Patentanspruch 3 vor.

Dabei wird eine Anordnung mit einer Einrichtung zum Austausch von Zeitmarken zwischen einem Zeitgeber in einem ersten Netzwerk und einem Zeitempfänger in einem zweiten Netzwerk vorgeschlagen, wobei in dem ersten Netzwerk ein erstes und in dem zweiten Netzwerk ein davon unterschiedliches zweites Protokoll für die Zeitmarken vorgesehen ist, und wobei die Zeitmarken jeweils aus Datenpaketen mit einer Nutzlast aus einer codierten Zeitinformation bestehen. Dabei ist die Einrichtung zum Empfang einer ersten Zeitmarke mittels des ersten Netzwerks und zur direkten Entnahme der codierten Zeitinformation, und zum Einfügen der codierten Zeitinformation in ein neues Datenpaket des zweiten Protokolls und zum Versenden dieses Datenpaketes mittels des zweiten Netzwerks eingerichtet. Durch eine solche Anordnung ist zum Einen eine schnelle Übertragung der Zeitinformation über eine Netzwerkgrenze hinweg möglich, so dass eine von der Umsetzungsdauer abhängige "Drift" verringert werden kann, und zum Anderen ermöglicht eine geschlossene Regelung der Verzögerungen über eine oder alle Netzwerkgrenzen hinweg eine Vermeidung der Nachteile einer kaskadierten Regelung, also eine Verbesserung des Schwingungs-Verhaltens, eine Verringerung der erforderlichen Gesamt-Dämpfung und damit ein schnelleres Einschwingen auf den Sollwert.

Die Aufgabe wird außerdem durch ein Verfahren zum Austausch von Zeitmarken zwischen einem ersten und eine zweiten Netzwerk gelöst, wobei in dem ersten Netzwerk ein erstes und in dem zweiten Netzwerk ein davon unterschiedliches zweites Protokoll für die Zeitmarken verwendet wird, wobei für die Zeitmarken jeweils Datenpakete mit einer Nutzlast aus einer codierten Zeitinformation verwendet werden. Dabei wird in einem ersten Schritt eine erste Zeitmarke mittels des ersten Netzwerks empfangen, in einem zweiten Schritt aus dem empfangenen Datenpaket die codierte Zeitinformation extrahiert, in einem dritten Schritt ein Datenpaket gemäß des zweiten Protokolls erzeugt, wobei als Nutzlast in das Datenpaket die dem ersten Datenpaket entnommene codierte Zeitinformation hinzugefügt wird, und in einem vierten Schritt das zweite Datenpaket als Zeitmarke mittels des zweiten Netzwerks an zumindest einen Empfänger übertragen. Durch ein solches Verfahren lassen sich die Vorteile realisieren, die bereits im Zusammenhang mit der erfindungsgemäßen Anordnung erläutert wurden.

Vorteilhafte Ausgestaltungen der erfindungsgemäßen Anordnung sind in dem abhängigen Patentansprüche 2 angegeben, wobei dessen Merkmale und Vorteile auch sinngemäß für das erfindungsgemäße Verfahren gelten; vorteilhafte Ausgestaltungen des erfindungsgemäßen Verfahrens sind in dem abhängigen Patentanspruchen 4 angegeben, wobei auch dessen Merkmale und Vorteile sinngemäß für die erfindungsgemäße Anordnung gelten.

Die Vorteile der erfindungsgemäßen Anordnung, insbesondere die Verkürzung der Umsetzungszeit durch eine kurze "Bridge Delay" anstelle der Zyklusdauer der "Boundary Clock" und die Vermeidung einer kaskadierten Regelung, wird um so größer, je mehr Netzwerke mit unterschiedlichen Kommunikationsprotokollen und unterschiedlichen Protokollen für die Zeitmarken zwischen dem Zeitgeber und dem Zeitempfänger durchlaufen werden. Deswegen ist es vorteilhaft, wenn eine weitere erfindungsgemäße Einrichtung zum Austausch der Zeitmarken und der Korrekturmeldungen zwischen dem zweiten und zumindest einem dritten Netzwerk vorgesehen ist. Alternativ oder zusätzlich kann die oder jede Einrichtung vorteilhaft eine erste Korrektureinrichtung zur Messung und Berücksichtigung der Umsetzungsverzögerung (Bridge Delay) beim Empfang und bei der Auswertung der ersten Zeitmarke und bei der Generierung und dem Versenden des als eine zweite Zeitmarke verwendeten Datenpakets umfassen. In einer alternativen Ausgestaltung kann die Zeitdauer, die für die Umsetzung der Zeitmarken des ersten Protokolls in Zeitmarken des zweiten Protokolls benötigt wird, bei einer einmaligen Kalibrierung ausgemessen werden und als eine Konstante bei einer Laufzeitkorrektur der Zeitmarken bzw. einer Anpassung des Inhaltes des "Delay"-Datenfeldes der Zeitmarken berücksichtigt werden.

Vorteilhafte Ausgestaltungen des erfindungsgemäßen Verfahrens werden nachfolgend anhand der Zeichnungen erläutert. Sie dienen gleichzeitig der Erläuterung von erfindungsgemäßen Verfahren. Dabei können auch Merkmale verschiedener vorteilhafter Ausgestaltungen miteinander kombiniert werden.

Dabei zeigen:
- Figur 1: eine Anordnung gemäß dem Stand der Technik mit zwei Netzwerken und einem Zeitgeber und einem Zeitempfänger, wobei in einem Gateway zwischen den beiden Netzwerken eine "Boundary Clock" zur Weiterleitung der Zeitinformation eingesetzt wird,
- Figur 2: die Anordnung mit zwei Netzwerken, Zeitgeber und Zeitempfänger, wobei eine erfindungsgemäße Einrichtung zur Umsetzung der Zeitmarken vorgesehen ist,
- Figur 3: eine Anordnung mit mehreren Einrichtungen zur Umsetzung der Zeitmarken, wobei die Zeitmarken drei Netzwerke durchlaufen, und
- Figur 4: in schematischer Darstellung der strukturelle Aufbau von Zeitmarken gemäß zweier unterschiedlicher Protokolle, wobei die Übernahme von Datenfeldern mit der codierten Zeitinformation von einer ersten Zeitmarke in eine zweite Zeitmarke dargestellt ist.

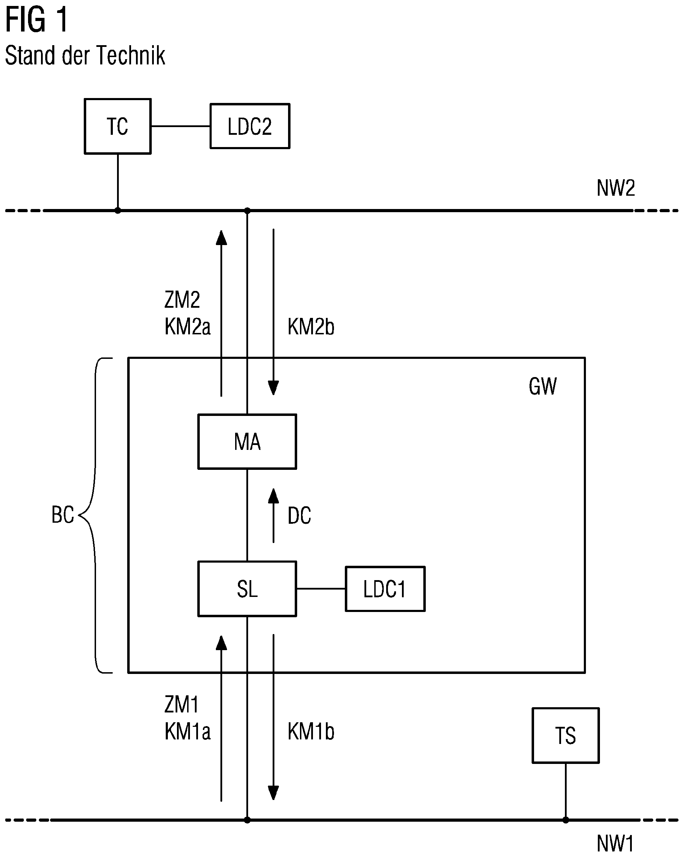

In der Figur 1 ist eine Anordnung nach dem Stand der Technik gezeigt, bei der in einem ersten Netzwerk NW1 ein Zeitgeber TS (Time Message Server) und in einem zweiten Netzwerk NW2 ein Zeitempfänger TC (Time Message Client) angeordnet ist. Die beiden Netzwerke NW1, NW2 unterscheiden sich sowohl hinsichtlich ihrer Netzwerkprotokolle als auch hinsichtlich ihrer Protokolle für Zeitmarken. Deswegen sind die Netzwerke NW1, NW2 über ein Gateway GW miteinander verbunden, welches grundsätzlich den Austausch von Nachrichten, insbesondere von Datenpaketen, sicherstellt. Im Folgenden wird jedoch nur auf die für Zeitmarken bzw. Zeit-Synchronisation wichtigen Einrichtungen des Gateways GW eingegangen. Dazu weist das Gateway eine sog. "Boundary Clock" auf, welche im Wesentlichen aus einem Zeitempfänger SL (Sync Slave) und aus einem Zeitgeber MA (Sync Master) besteht. Zusätzlich sind die Zeitnehmer SL, TC mit Korrektureinrichtungen LDC1, LDC2 (Line-Delay-Compensation) zur Ermittlung der jeweiligen Signallaufzeiten und, wie jeder beteiligte Knoten, mit einer (nicht dargestellten) Kompensation zur Berücksichtigung der jeweiligen "Verweildauer" der Zeitmarke im jeweiligen Knoten ausgestattet; diese "Verweildauern" und Laufzeiten werden in einem Datenfeld "Delay" der Zeitmarken kumuliert und im jeweiligen Zeitempfänger SL, TC berücksichtigt.

Die Anordnung gemäß dem Stand der Technik ist dabei derart ausgestaltet, dass diese eine Synchronisation zwischen dem Zeitgeber TS und dem Zeitempfänger SL mittels der Zeitmarke ZM1 vornimmt, wobei mittels der Korrektureinrichtung LDC1 und mittels der Korrekturmeldungen KM1a, KM1b eine Berücksichtigung der Laufzeitverzögerung in dem Netzwerk NW1 vorgenommen wird. Der Zeitempfänger SL dekodiert die in der Zeitmarke ZM1 übertragene codierte Zeitinformation und übermittelt diese decodierte Zeitinformation DC zu dem Zeitgeber MA, welcher danach den Zeitempfänger TC synchronisiert, wobei eine neue Zeitmarke ZM2 mit einer neu codierten Zeitinformation über das Netzwerk NW2 zu dem Zeitempfänger TC übermittelt wird. Die Laufzeitverzögerung im Netzwerk NW2 wird mittels der Korrekturmeldungen KM2a, KM2b und der Korrektureinrichtung LDC2 ermittelt und ebenfalls berücksichtigt. Überdies kann in der Anordnung gemäß der Figur 1 eine (nicht dargestellte) Korrektur von Abweichungen innerhalb der "Boundary Clock" vorgenommen werden, indem beispielsweise zur Ermittlung des hier auftretenden "Delays" der Zeitpunkt, an dem die Zeitmarke ZM1 vom Zeitempfänger SL empfangen wird, und der Zeitpunkt, zu dem die Zeitmarke ZM2 erstellt wird, gemessen wird, und dabei die Zeitdifferenz aus den Messwerten zur Korrektur der Zeitinformation in der Zeitmarke ZM2 verwendet wird; auch dieser "Delay" wird im "Delay"-Datenfeld der Zeitmarken addiert. Außerdem wird der "Zeitgeber" MA der "Boundary Clock" mittels innerhalb der "Boundary Clock" BC ermittelter Regler-Faktoren (RCF, OCF) dem "Zeitnehmer" SL nachgeführt.

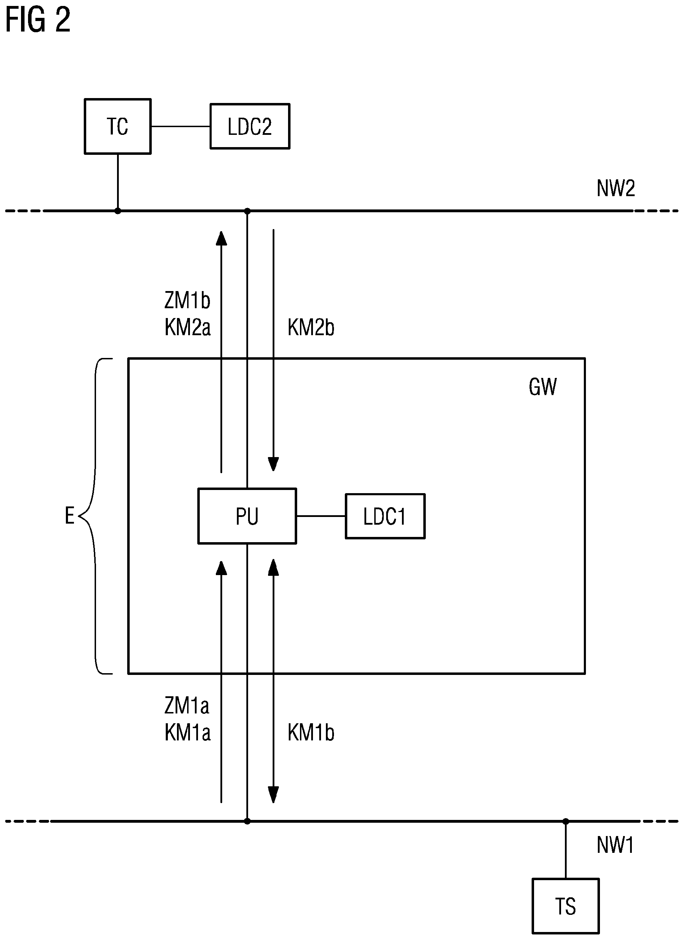

Im Folgenden wird anhand der Figur 2 eine erfindungsgemäße Anordnung zur Synchronisation des Zeitempfängers TC mit dem Zeitgeber TS beschrieben, wobei die bereits mit der Figur 1 eingeführten Einrichtungen und Komponenten mit identischen Bezugszeichen nicht neu beschrieben werden. In dem Gateway GW wird nun anstelle einer Boundary Clock BC eine Einrichtung PU (Protokollumsetzer) eingesetzt, die erfindungsgemäß die über das Netzwerk NW1 durch den Zeitgeber TS übertragene Zeitmarke ZM1a empfängt und in eine Zeitmarke ZM1b gemäß desjenigen Protokolls umsetzt, welches in dem Netzwerk NW2 gültig ist, und an den Zeitempfänger TC überträgt. Dabei wird die in dem Datenpaket, welches die Zeitmarke ZM1a bildet, enthaltene codierte Zeitinformation nicht decodiert, sondern allenfalls unformatiert und direkt in die Zeitmarke ZM1b übernommen, wobei in einer alternativen Ausführungsform das Datenpaket, welches die Zeitmarke ZM1a bildet, auch als Zeitmarke ZM1b weiter versendet werden kann, wobei jedoch hierbei die Übertragungsprotokoll-spezifischen Felder, insbesondere der sog. "Header", auf die Belange des Netzwerks NW2 geändert werden müssen. Ebenso wird der Inhalt des Datenfeldes "Delay" mit den bis hierher kumulierten Verzögerungszeiten von der Zeitmarke ZM1a in die Zeitmarke ZM1b übernommen. In einer vorteilhaften Ausgestaltung kann durch eine sog. "Bridge Delay-Compensation" die Verzögerung, die durch die Umsetzung der Zeitmarke ZM1a in die Zeitmarke ZM1b auftritt, ebenfalls berücksichtigt werden; diese wird zum Datenfeld "Delay" addiert. Dabei kann man sich zu Nutze machen, dass im Gegensatz zur Anordnung aus dem Stand der Technik nicht zwei asynchron arbeitende Applikationen, nämlich der Zeitempfänger SL und der Zeitgeber MA, sondern nur eine einzige Applikation, nämlich die Einrichtung PU, eingesetzt wird. Der Vorteil besteht darin, dass beim Einsatz einer einzigen Anwendung die Umsetzungsverzögerung relativ klein und konstant ausfällt und daher in einer alternativen Ausführungsform in einem einmaligen Vorgang ("Kalibrierung") ausgemessen bzw. errechnet werden kann.

In einer weiteren alternativen Ausgestaltung der Erfindung wird im Unterschied zur Anordnung gemäß dem Stand der Technik die Korrekturmeldung KM1a, die von dem Zeitgeber TS zur Ermittlung der Laufzeit (Line Delay) über das Netzwerk NW1 übermittelt wird, durch die Einrichtung PU ebenfalls als Korrekturmeldung KM2a in ein protokollgemäßes Datenpaket des Netzwerks NW2 umgesetzt und an den Zeitempfänger TC weitergeleitet, wobei die "Rückantwort", nämlich die Korrekturmeldung KM2b, ebenfalls durch die Einrichtung PU "weitergereicht" und als Korrekturmeldung KM1b zu dem Zeitgeber TS übermittelt wird. Dadurch ist es möglich, die gesamte Laufzeitverzögerung der Zeitmarke ZM1a, ZM1b inklusive der Umsetzungsverzögerungen (Bridge Delay) in einem einzigen Korrekturvorgang zu berücksichtigen.

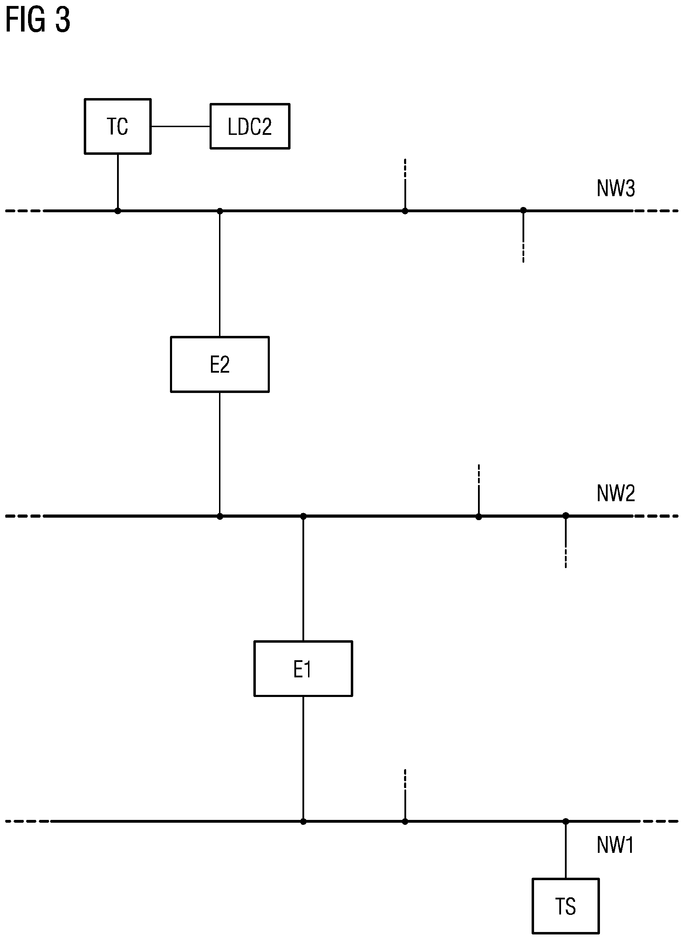

Die Vorteile des erfindungsgemäßen Verfahrens bzw. des Einsatzes erfindungsgemäßer Einrichtungen wird insbesondere bei solchen Anordnungen gemäß der Figur 3 deutlich, wenn eine Vielzahl von Netzwerken NW1, NW2, NW3 miteinander verschaltet sind und mehrere Einrichtungen E1, E2 nacheinander von einer Zeitmarke durchlaufen werden müssen. Hier genügt eine einzige Anpassung einer Taktrate des Zeitempfängers TC, so dass eine kaskadierte Regelung mehrerer "Empfänger-Uhren" mittels Faktoren (RCF, OCF) nicht notwendig ist. Dabei ist die Anordnung gemäß der Figur 3 bereits eine Vereinfachung, denn in realen Anordnungen können durchaus Fälle auftreten, bei denen Netzwerke in zwei- oder dreistelliger Zahl durchlaufen werden müssen.

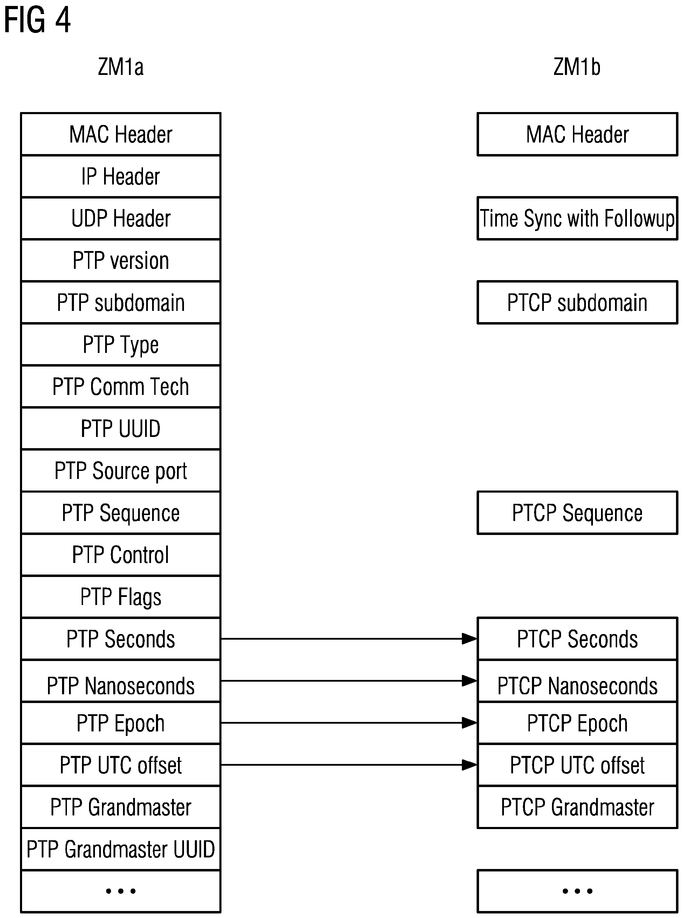

In der Figur 4 sind exemplarisch zwei Zeitmarken ZM1a, ZM1b dargestellt, wobei die Zeitmarke ZM1a nach dem PTP-Protokoll codiert ist und in Ethernet-Netzwerken mit dem TCP/IP-Protokoll zum Einsatz kommen kann, wogegen die Zeitmarke ZM1b gemäß dem PTCP-Protokoll codiert ist und beispielsweise in Automatisierungsnetzwerken mit Profinet-Protokoll verwendet werden kann; beide Zeitmarken ZM1a, ZM1b sind vereinfacht und ausschnittsweise dargestellt. Hierbei ist zu sehen, dass die Zeitinformation in mehreren Datenfeldern codiert ist, beispielsweise Sekunden, Nanosekunden, Epochen, Offset etc. Weiter ist zu sehen, dass die codierte Zeitinformation bei beiden Protokollen gleich strukturiert ist; es bestehen allenfalls formale Unterschiede, beispielsweise Länge der Datenfelder etc., zwischen den beiden Protokollen. Daraus ist ersichtlich, dass ein zwischenzeitliches Decodieren und Neucodieren der Zeitinformation nicht notwendig ist; die Inhalte der Datenfelder können nahezu unverändert von einem Protokoll in das andere Protokoll umgesetzt werden. Ähnliches gilt für die (nicht dargestellte) Information über die Laufzeit, das sog. "Delay"-Datenfeld. Diejenigen Datenfelder, die nicht "kompatibel" sind, oder die z.B. zwar in dem umzusetzenden Protokoll, nicht aber in dem umgesetzten Protokoll vorhanden sind, können erfindungsgemäß durch Standardwerte (Default-Werte) befüllt werden, die beispielsweise projektiert werden können, durch ein Evaluierungs-Programm ermittelt werden können, oder aber mit einer einmaligen Abfrage von einem Benutzer erfragt werden können.

Während anhand der vorstehenden Ausführungsbeispiele nur unidirektionale Übertragungen von Zeitmarken beschrieben wurden, können die beschriebenen Einrichtungen selbstverständlich auch zum bidirektionalen Austausch von Zeitmarken eingesetzt werden. Dadurch, dass in den einzelnen betrachteten Netzwerken jeweils nur protokollkonforme Zeitmarken verwendet werden, und nicht etwa protokollfremde Zeitmarken oder in "Datencontainern" verpackte Zeitmarken anderer Kommunikations- und Zeitprotokolle, brauchen die in den betrachteten Netzwerken verwendeten anderweitigen Netzwerkelemente, insbesondere Router, Switche und andere aktive Komponenten, nicht angepasst werden. Weiterhin ist ein bedeutender Vorteil dadurch gegeben, dass die Zeitgeber TS und Zeitempfänger TC, beispielsweise die bekannten PTCP-Geräte, für die Anwendung des Verfahrens bzw. für das Zusammenwirken mit der erfindungsgemäßen Einrichtung gegenüber den Geräten aus dem Stand der Technik nicht geändert werden müssen.

## Patentansprüche

1. Anordnung mit einer Einrichtung (E) zum Austausch von Zeitmarken (ZM1a, ZM1b) zwischen einem Zeitgeber (TS) in einem ersten Netzwerk (NW1) und einem Zeitempfänger (TC) in einem zweiten Netzwerk (NW2),
wobei in dem ersten Netzwerk (NW1) ein erstes und in dem zweiten Netzwerk (NW2) ein davon unterschiedliches zweites Protokoll für die Zeitmarken (ZM1a, ZM1b) vorgesehen ist, wobei die Zeitmarken (ZM1a, ZM1b) jeweils aus Datenpaketen mit einer Nutzlast aus einer codierten Zeitinformation bestehen,
wobei die Einrichtung (E) zum Empfang einer ersten Zeitmarke (ZM1a) mittels des ersten Netzwerks (NW1) und zur direkten Entnahme der codierten Zeitinformation eingerichtet, und zum Einfügen der codierten Zeitinformation in ein neues Datenpaket des zweiten Protokolls und zum Versenden dieses Datenpaketes als zweite Zeitmarke (ZM1b) mittels des zweiten Netzwerks (NW2) eingerichtet ist,
**dadurch gekennzeichnet,**
**dass** zumindest eine weitere Einrichtung (E) zum Austausch der Zeitmarken (ZM1b) zwischen dem zweiten und zumindest einem dritten Netzwerk (NW3) vorgesehen ist, wobei eine Berücksichtigung einer kumulierten Laufzeitverzögerung der mehrfach umgesetzten Zeitmarken (ZM1a, ZM1b) bei dem Zeitempfänger (TC) vorgesehen ist.

2. Anordnung nach Patentanspruch 1,
**dadurch gekennzeichnet,**
**dass** die Einrichtung (E) eine erste Korrektureinrichtung (LDC1) zur Erfassung der Laufzeit der Zeitmarke (ZM1a) in dem ersten Netzwerk (NW1) umfasst.

3. Verfahren zum Austausch von Zeitmarken (ZM1a, ZM1b) zwischen einem ersten und einem zweiten Netzwerk (NW2),
wobei in dem ersten Netzwerk (NW1) ein erstes und in dem zweiten Netzwerk (NW2) ein davon unterschiedliches zweites Protokoll für die Zeitmarken (ZM1a, ZM1b) verwendet wird, wobei für die Zeitmarken (ZM1a, ZM1b) jeweils Datenpakete mit einer Nutzlast aus einer codierten Zeitinformation verwendet werden,
wobei in einem ersten Schritt eine erste Zeitmarke (ZM1a) eines Zeitgebers (TS) mittels des ersten Netzwerks (NW1) empfangen wird,
wobei in einem zweiten Schritt aus dem empfangenen Datenpaket die codierte Zeitinformation extrahiert wird,
wobei in einem dritten Schritt ein Datenpaket gemäß des zweiten Protokolls erzeugt wird, wobei als Nutzlast in das Datenpaket die dem ersten Datenpaket entnommene codierte Zeitinformation hinzugefügt wird, und
wobei in einem vierten Schritt das zweite Datenpaket als Zeitmarke (ZM1b) mittels des zweiten Netzwerks (NW2) an zumindest einen Zeitempfänger (TC) übertragen wird,
**dadurch gekennzeichnet,**
**dass** ein Austausch der Zeitmarken (ZM1a, ZM1b) zwischen dem zweiten und zumindest einem dritten Netzwerk (NW3) mit einem Zeitempfänger (TC) durchgeführt wird, wobei eine Berücksichtigung einer kumulierten Laufzeitverzögerung der mehrfach umgesetzten Zeitmarken (ZM1a, ZM1b) im Zeitempfänger (TC) erfolgt.

4. Verfahren nach Patentanspruch 3,
**dadurch gekennzeichnet,**
**dass** bei der Generierung des zweiten Datenpakets eine Umsetzungsverzögerung berücksichtigt wird, indem die für die Umsetzung der codierten Zeitinformation von dem ersten Datenpaket in das zweite Datenpaket benötigte Zeit zu einem Wert in einem Datenfeld für Laufzeitverzögerungen in der Zeitmarke (ZM1b) addiert wird.

## Claims

1. Arrangement having a device (E) for the interchange of time markers (ZM1a, ZM1b) between a time generator (TS) in a first network (NW1) and a time receiver (TC) in a second network (NW2),
wherein the first network (NW1) contains a first and the second network (NW2) contains a different second protocol for the time markers (ZM1a, ZM1b),
wherein the time markers (ZM1a, ZM1b) each comprise data packets having a payload comprising a coded time information item,
wherein in that the device (E) is set up to receive a first time marker (ZM1a) using the first network (NW1) and to directly remove the coded time information item, and is set up to insert the coded time information item into a new data packet of the second protocol and to send this data packet as a second time marker (ZM1b) using the second network (NW2)
**characterized**
**in that** at least one further device (E) is provided for the interchange of the time markers (ZM1b) between the second and at least one third network (NW3), wherein provision is made for a cumulated propagation time delay in the repeatedly converted time markers (ZM1a, ZM1b) to be taken into account on the time receiver (TC).

2. Arrangement according to Patent Claim 1
**characterized**
**in that** the device (E) comprises a first correction device (LDC1) for capturing the propagation time of a time marker (ZM1a) in the first network (NW1).

3. Method for the interchange of time markers (ZM1a, ZM1b) between a first and a second network (NW2),
wherein the first network (NW1) involves the use of a first and the second network (NW2) involves the use of a different second protocol for the time markers (ZM1a, ZM1b),
wherein the time markers (ZM1a, ZM1b) each have data packets used for them having a payload comprising a coded time information item,
wherein
a first step involves a first time marker (ZM1a) from a time generator (TS) being received by means of the first network (NW1),
wherein a second step involves the coded time information item being extracted from the received data packet, wherein a third step involves a data packet being produced on the basis of the second protocol, wherein the payload added to the data packet is the coded time information item removed from the first data packet, and
wherein a fourth step involves the second data packet being transmitted to at least one time receiver (TC) as a time marker (ZM1b) using the second network (NW2)
**characterized**
**in that** the time markers (ZM1a, ZM1b) are interchanged between the second and at least one third network (NW3) having a time receiver (TC), wherein a cumulated propagation time delay in the repeatedly converted time markers (ZM1a, ZM1b) is taken into account in the time receiver (TC).

4. Method according to Patent Claim 3,
**characterized**
**in that** the generation of the second data packet takes into account a conversion delay by adding the time required for the conversion of the coded time information from the first data packet to the second data packet to a value in a data field for propagation time delays in the time marker (ZM1b).

## Revendications

1. Agencement comprenant un dispositif (E) d'échange de repères (ZM1a, ZM1b) temporels entre un donneur (TS) de temps d'un premier réseau (NW1) et un récepteur (TC) de temps d'un deuxième réseau (NW2),
dans lequel il est prévu, dans le premier réseau (NW1), un premier et, dans le deuxième réseau (NW2), un deuxième protocole, qui en est différent pour les repères (ZM1a, ZM1b) temporels, les repères (ZM1a, ZM1b) temporels étant constitués chacun de paquets de données ayant une charge utile composée d'une information temporelle codée,
dans lequel le dispositif (E) est conçu pour la réception d'un premier repère (ZM1a) temporel au moyen du premier réseau (NW1) et pour la prise de l'information temporelle codée et pour l'insertion de l'information temporelle codée dans un nouveau paquet de données du deuxième protocole et pour l'envoi de ce paquet de données comme deuxième repère (ZM1b ) temporel au moyen du deuxième réseau (NW2),
**caractérisé**
**en ce qu'**il est prévu au moins un autre dispositif (E) pour l'échange des repères (ZM1b ) temporels entre le deuxième et au moins un troisième réseau (NW3), une prise en compte d'un retard cumulé de temps de propagation des repères (ZM1a, ZM1b) temporels transposés plusieurs fois étant prévue chez le récepteur (TC) de temps.

2. Agencement suivant la revendication 1,
**caractérisé**
**en ce que** le dispositif (E) comprend un premier dispositif (LDC1) de correction pour détecter le temps de propagation du repère (ZM1a ) temporel dans le premier réseau (NW1).

3. Procédé d'échange de repères (ZM1a, ZM1b ) temporels entre un premier (NW1) et un deuxième réseaux (NW2), dans lequel on utilise, pour les repères (ZM1a, ZM1b ) temporels, dans le premier réseau (NW1) un premier et dans le deuxième réseau (NW2) un deuxième protocole, qui en est différent, dans lequel on utilise, pour les repères (ZM1a, ZM1b) temporels, respectivement des paquets de données ayant une charge utile composée d'une information temporelle codée,
dans lequel, dans un premier stade, on reçoit un premier repère (ZM1a) temporel d'un donneur (TS) de temps au moyen du premier réseau (NW1),
dans lequel, dans un deuxième stade, on extrait l'information temporelle codée du paquet de données reçu,
dans lequel, dans un troisième stade, on produit un paquet de données suivant le deuxième protocole, dans lequel on ajoute, comme charge utile dans le paquet de données, l'information temporelle codée prélevée du premier paquet de données et
dans lequel, dans un quatrième stade, on transmet le deuxième paquet de données comme repère (ZM1b) temporel au moyen du deuxième réseau (NW2) à au moins un récepteur (TC) de temps,
**caractérisé**
**en ce que** l'on effectue, par un récepteur (TC) de temps, un échange des repères (ZM1a, ZM1b) temporels entre le deuxième et au moins un troisième réseau (NW3), une prise en compte d'un retard de temps par propagation cumulée des repères (ZM1a, ZM1b) temporels modifiés plusieurs fois étant effectuée dans le récepteur (TC) de temps.

4. Procédé suivant la revendication 3,
**caractérisé**
**en ce que**, lors de la production du deuxième paquet de données, on prend en compte un retard de transposition par le fait que le temps nécessaire à la transposition de l'information temporelle codée du premier paquet de données au deuxième paquet de données est ajouté à une valeur dans un champ de données pour des retards de temps de propagation dans le repère (ZM1b ) temporel.
